# EUROPEAN PATENT APPLICATION

(11) **EP 2 471 626 A2**
(43) Date of publication of application: **04.07.2012**
(21) Application number: 11460040.6
(22) Date of filing: 28.07.2011
(51) Int. Cl.: B23K 26/26, B23K 37/047, B21C 37/08, B23K 26/08, B23K 37/02

(54) **A method and a device for laser welding of metal post shafts**

(30) Priority: 30.12.2010 PL 39348910
(71) Applicant: "Elektromontaz-Rzeszow" S.A., 35-060 Rzeszow (PL)
(72) Inventor: Buc, Witold, 35-118 Rzeszów (PL); Maciolek, Adam, 35-301 Rzeszów (PL); Lipski, Marek, 35-620 Rzeszów (PL); Sowa, Zbigniew, 35-604 Rzeszów (PL)
(74) Representative: Warzybok, Tadeusz

(57) **Abstract**

The subject of the invention is a method of welding a metal post shaft, semi-finished product of which in the form of truncated cone or truncated polygonal pyramid has a longitudinal slit, consisting in introducing said semi-finished product to a welding device, positioning said slit in such a way that the solid is situated horizontally, lateral pressing both edges creating the slit against each other and welding it by means of laser method, with simultaneous process of positioning of the slit by means of the device's clamping elements. It consists then in that, after placing the semi-finished product on revolving rollers (5) of adjustable support (6) of the welding device, slit (29) of the post shaft (4) is being levelled by means of said beam and its position blocked by means of a side stop assembly (32); further, the semi-finished product is bilaterally and axially clamped in its horizontal plane by means of rack-and-pinion clamping assemblies (3) distributed symmetrically along the whole product length until contact is achieved between edges of the slit (29), while at the same time the contacting edges are pressed down by means of a hold-down roller (25) moving along the slit in pace with fibre laser head (27) of the welding device (28), following the roller and welding the slit edges together along the whole length of semi-finished post shaft (4).

## Description

The subject of the invention is a method and a device for laser welding of metal post shafts constituting semi-finished products in the form of truncated cone or truncated polygonal pyramid with a slit existing along the whole length of the structures between edges of semi-finished product and created in the course of profiling them from sheet metal. Pole shafts welded this way are used for fabrication of lamp-posts, lighting and antenna masts, supporting structures for electric power transmission lines, and other structures for similar applications.

Patent description from Polish patent application No. P-387779 reveals a method of fabrication of tapered cylindrical post by means of laser welding consisting in that the semi-finished post prepared earlier in the form of rounded off and not fully closed longitudinal element is subject to laser welding in the course of continuous process, within the whole thickness of the material, while the slit between joined edges of the semi-finished post is preferably kept in horizontal position, and the edges of the semi-finished product to be joined are pressed against each other by means of clamping elements distributed on both sides in the vicinity of the slit as well as on its opposite side. In the course of welding, location of clamping elements is controlled automatically by means of a computer and adopted to the conical form of the post, while the semi-finished post is moved in the welding machine from its larger diameter side towards the smaller diameter end with velocity corresponding to this of the laser welding process.

Further, the slit welding device revealed in the above-quoted description is equipped with a welding laser acting on the slit situated in top horizontal position and clamping elements provided with rollers a part of which is situated on the opposite side of the welded slit and the other part is located in the vicinity of the slit and on both sides of it, where rollers of said clamping elements are connected to and co-operate with appropriate belt conveyors transporting the semi-finished post while its slit is being welded.

An inconvenience of the method and the device used for its application consists both in lack of possibility to position the edge of the welded slit of semi-finished post shaft in perfectly horizontal position and in excessively expanded and complex construction of the device requiring significant space in view of necessity do displace the semi-finished product in the course of welding. Moreover, the commonly known method of welding with the use of CO₂ lasers is characterised with both low efficiency and high cost, and the devices used for this purpose do not allow for perfect levelling of the welded slit.

Further, Polish patent description No. P-385943 reveals a method of fabrication of metal lamp-post shafts consisting in that from sheet steel 3-4 mm thick, trapezoid elements are cut out by means of laser method with edges of their sides being bevelled at the same time at angle α = 67°30' and then, from elements fabricated that way, semi-finished products in the form of truncated cones or polygonal pyramids are coiled by means of commonly known methods, then located between driving rollers, positioned by means of a pair or rollers situated opposite each other, and laser butt-welded with the use of a laser head while the semi-finished product is fed with linear velocity equalling preferably 2-3 m/min. In the case of fabrication of circular conical lamp-post shafts, trapezoid elements cut out from steel plate sheets representing shaft surface development have straight sides joined by means of laser welding method. In the course of cutting out the trapezoid elements and bevelling their edges or cutting trapezoid elements with straight edges as well as in the course of laser welding of the profiled semi-finished post shafts, a CO₂ laser head with power of 4-5 kW is used with continuous power control within 0,2-5 kW range, at wavelength of 10,6 nm and with pulse duration of 10 µs.

The purpose of the present invention consists in provision of a method of laser welding of slits in semi-finished metal posts allowing to reduce significantly the cost of the process with simultaneous increase of productivity and possibility to obtain virtually uniform weld along the whole of its length. Further purpose of this invention consists in providing a simple and compact design of a device for laser welding allowing to level the slit to be welded very precisely thus improving significantly the quality of the produced welds. Unexpectedly, it was found in the course of tests and research work carried out in connection with this invention that one of its purposes consisting in increased productivity of welding process, improved weld parameters, failure-free operation and significantly reduced welding cost can be achieved by replacing CO₂ laser used previously for laser welding with fibre laser, main part of which is the active optical fibre in which laser radiation is generated.

The principle of the metal post shaft welding method according to this invention consists in that after positioning the semi-finished product on rotating rollers of adjustable support beam of the welding machine, the pole shaft slit is levelled by means of said beam and blocked in this position by means of a side stop assembly, and then the semi-finished product is bilaterally and axially clamped in the horizontal plane from both sides by means of rack clamping assemblies, while at the same time the contacting edges are pressed by means of a hold-down roller moving over the slit in pace with the fibre laser head following the roller and welding together the slit edges along the whole length of semi-finished post shaft. In the course of laser welding of the semi-finished post shaft slit with the use of fibre laser, the semi-finished product is kept in unchanged position, while the fibre laser head together with the clamping roller move along the welded slit with synchronised linear velocity, and positioning of the contacting edges creating the slit of semi-finished post shaft is achieved by means of forces acting in two mutually perpendicular planes. Moreover, the contacting edges of the slit of semi-finished post shaft are pressed against each other by means of multiple pairs of clamping elements, preferably semicircular, situated opposite each other in horizontal axis of the semi-finished product, and by means of a sliding hold-down element, preferably of roller type, remaining in contact with the welded slit.

Further, the central idea of design of the device for welding slits in semi-finished metal post shafts with the use of fibre laser consists in that the body of the device represents a cuboidal frame supporting structure made of steel sections, upper part of which is equipped in horizontally located longitudinal beam, joined movably and slidably with a mobile clamping assembly, while both longitudinal and horizontally situated beams topping upper ends of lower vertical beams of the supporting structure are connected separably with rack-and-pinion clamping assemblies, clamping elements of which are situated opposite each other, in line with horizontal axis of the welded semi-finished post shaft and perpendicularly to vertical axis of the semi-finished product and the clamping roller, and moreover, opposite the upper beam and under the rack-and-pinion clamping assemblies, in line with their vertical symmetry axes, a support beam is situated horizontally and longitudinally, upper part of which is provided with support rollers connected rotationally with the beam, while both ends of the beam are equipped with two mechanisms fixing its horizontal position, and next to the body, on running rails, a welding device is located equipped with a robot extension arm with a fibre laser head, situated immediately after hold-down roller of the mobile clamping assembly. Lower surface of the longitudinal beam is preferably provided with rolling guides in which the mobile clamping assembly is slidably mounted, with an outrigger terminated preferably with a revolving hold-down roller and equipped with a driving pneumatic actuator, while the support beam is equipped with revolving concave barrel-shaped support rollers distributed preferably along the whole of its length, and the mechanism supporting both ends of said beam represent supporting elements into which ends of bolts provided in knobs are screwed in with the other ends screwed into threaded holes provided in both ends of the beam. Moreover, the rack-and-pinion clamping assemblies distributed preferably along the beam have identical construction and consists of a housing, covers of which are joined by means of screw bolts with profiled traction rollers mounted on them, and in axial seats of said covers there are two ball bearings mounted on axles with a pinion between them engaging two racks, profiled back sides of which constituting guides of the racks are in contact with angled lugs situated opposite each other, and racks of the rack-and-pinion clamping assemblies are provided with pneumatic actuators driving them. Ends of both lugs clamping the semi-finished post shaft along its horizontal axis of symmetry are preferably rounded.

Thanks to utilisation of the laser welding method employing a fibre laser operated with the use of optical fibre technology, effectiveness of welding longitudinal slits in semi-finished metal post shafts significantly increased, energy consumption was reduced to a necessary minimum, and that way the cost relating to laser operation turned out to be several times less compared to CO₂ lasers used previously. By equipping the welding device with a longitudinal beam connected rotationally with rotating rollers on which the welded semi-finished metal post shaft rests, with side mechanisms used for adjustment and precise levelling of the welded slit, and a side stop assembly blocking the shaft and thus also the levelled slit in the required position, it is possible to maintain control on levelling at different pole shaft convergence angles and diameters, thus ensuring perfect linearity in the course of the process of laser welding of the slits. Further, providing the device with a roller holding down edges of the slit eliminated entirely the possibility of relative displacement between edges of the welded slit.

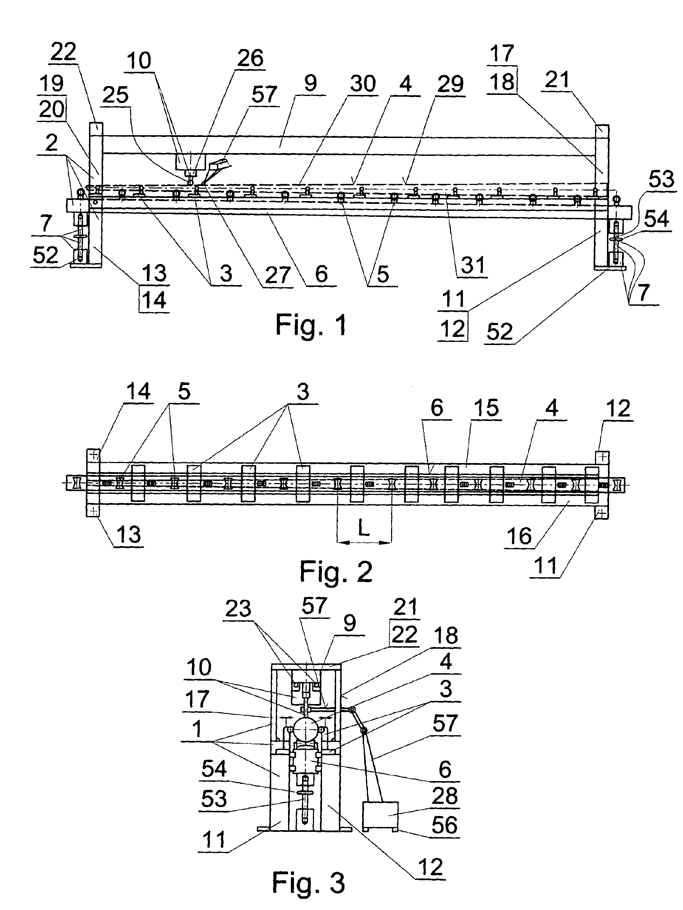

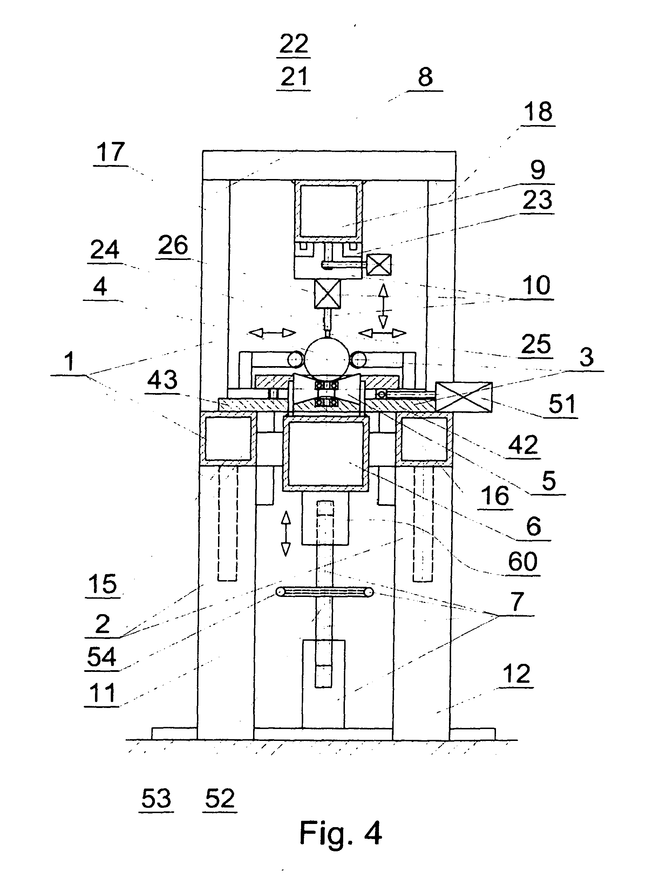

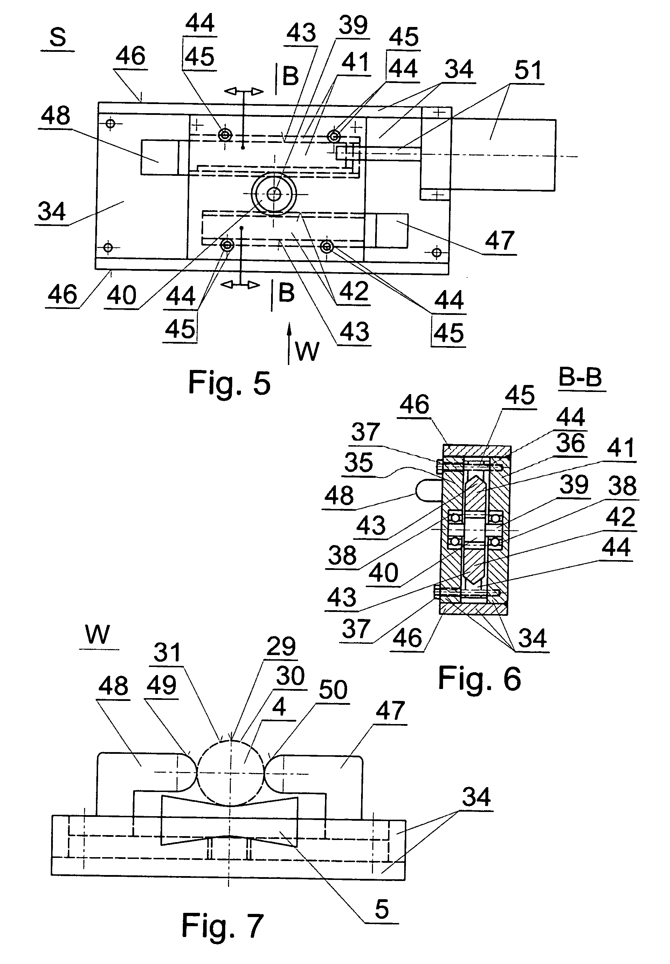

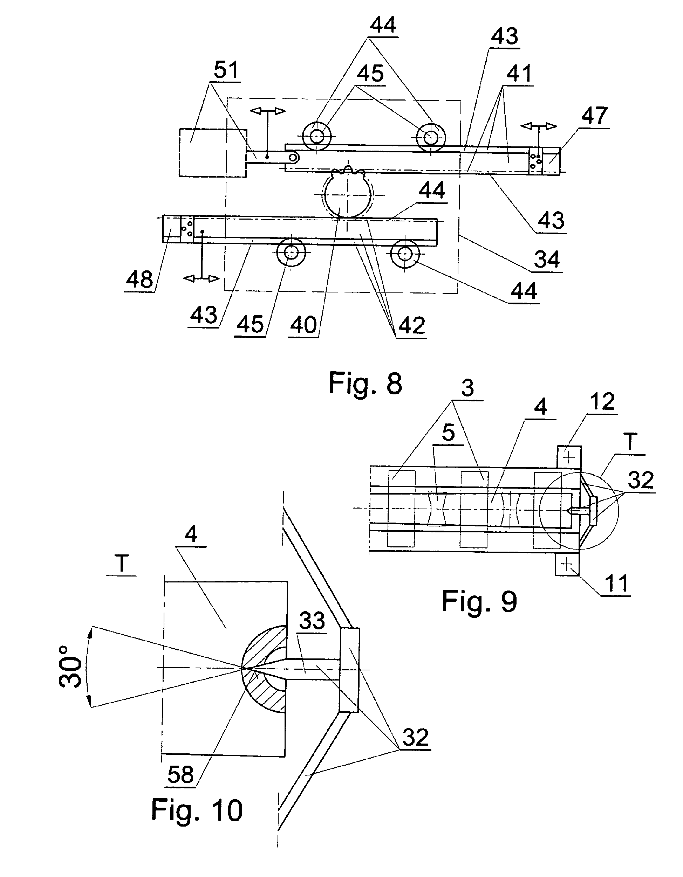

The subject of the invention is explained by means of an example design solution presented in figures, of which Fig. 1 presents schematically the device for welding metal post shafts, in the front view; Fig. 2 — the same device in the top view defined by direction of arrow "S"; Fig. 3 — the same device, in the side view; Fig. 4 —the same device, in vertical cross-section along line A-A of Fig. 1; Fig. 5 — the device's rack-and-pinion clamping assembly, in the side view; Fig. 6 — the same clamping assembly, in cross-section along line B-B; Fig. 7 — the same clamping assembly, in the side view defined by direction of arrow "W" of Fig. 5; Fig. 8 — a simplified diagram of the device's rack-and-pinion clamping assemblies shown in Fig. 5 presenting the principle of its operation in the course of clamping of a semi-finished post shaft eliminating the slit remaining after the sheet metal forming process; Fig. 9 — a fragment of the device with semi-finished post shaft positioned on rollers with the slit to be welded levelled, in the top view; and Fig. 10 — enlarged fragment "T" of the semi-finished product with a partial cross-section of its front face with tip of the stop assembly located in it.

The device for laser welding of metal post shafts is composed of cuboidal frame supporting structure (1), lower part (2) of which is connected with rack-and-pinion clamping assemblies (3) of the welded post shaft (4), laying on concave barrel-shaped support rollers (5) attached rotationally to the assembly of support beam (6) situated longitudinally in line with symmetry axis of the supporting structure (1), while both ends of the beam are supported by means of mechanisms (7) attached to them and controlling horizontal position of welded slit of the post shaft (4), while the upper portion (8) of the supporting structure (1) is provided with immobile and horizontally situated beam (9), to which the mobile clamping assembly (10) is slidably attached, the beam (9) being situated coaxially with the supporting beam (6). The lower part (2) of the device's supporting structure (1) consists of four vertically situated supporting beams (11), (12), (13) and (14), of which upper ends of vertical beams (11) and (13) as well as beams (12) and (14) are topped with horizontal beams, the front (15) and the rear one (16), while the upper part (8) of the structure consists of another four vertical beams (17), (18), (19) and (20), situated on ends of horizontal beams (15) and (16), of which upper ends of beams (17 and 18) and (19 and 20) are topped with beams (21) and (22) situated transversally and horizontally, respectively, to which, at their half lengths, a longitudinally and horizontally situated beam (9) is welded on with mobile clamping assembly (10) mounted slidably to it. To this end, beam (9) is provided with two rolling guides (23) on its lower side, in which the mobile clamping assembly (10) is slidably mounted and provided with outrigger (24) terminated with a revolving hold-down roller (25) driven by means of pneumatic actuator (26) connected mechanically with said assembly and followed closely by the fibre laser header (27) of the welding device (28) mounted on rails (56) and equipped with a robot extension arm (57) of said laser head, longitudinal motion of which along the welded slit (29) in post shaft (4) is synchronised with translation motion of clamping roller (25) pressed against said slit. Further, on the upper surface of lower support beam (6) situated horizontally in line with symmetry axis of the device's upper beam (9) there are concave barrel-shaped rollers (5) mounted on bearings and evenly distributed along the beam at distances (L) amounting to about 700 mm, with clamping assemblies (3), distributed also evenly between said rollers and attached to upper surfaces of beams (15) and (16) of supporting structure (1), said clamping assemblies pressing edges (30) and (31) of slit (29) of the pole shaft (4) to be welded by means of fibre laser header (27) against each other. Moreover, the lower part (2) of the device's supporting structure (1) is connected with the side stop assembly (32) equipped with a cylindrical-conical mandrel (33) positioning and maintaining in horizontal position the slit (29) of the pole shaft (4) by being located in the conical seat (58) of front wall (59) of said shaft before activation of the device's clamping assemblies (3). Each of the clamping assemblies (3) attached transversally to longitudinal beams (15) and (16) situated opposite each other and between rollers (5) supporting the pole shaft (4) has identical construction and consists of cuboidal housing (34) with two covers (35 and 36) joined by means of screw bolts (37). In seats provided in both covers (35) and (36), in line with their symmetry axes, an axle (39) is mounted on which two ball bearings (38) are fastened as well as pinion (40), engaging two racks (41) and (42) situated opposite each other, back sides (43) of which, quasi-conical in shape, constituting guides for these racks, adhere to the two outermost profiled traction rollers (44) mounted on cylindrical portions (45) of screw bolts (37) and covered with side flat bars (46), attached to covers (35 and 36) of the housing (34). Further, opposite ends of both racks (41) and (42) are connected with angled lugs (47 and 48) situated opposite each other and in the same plane, with their ends having semicircular curves (49) and (50) clamping the pole shaft (4) along its horizontal axis of symmetry, while rack (41) is connected with pneumatic actuator (51) providing drive to the assembly. Further, each of mechanisms (7) connected movably with ends of support beam (6) consists of a threaded support element (52), into which one end of bolt (53) is screwed, said bolt having knob (54) at its half length and the other end being screwed into a threaded hole (55) provided in offset (60) provided at the end of beam (6).

The fundamental principle of the laser welding device consists in that a semi-finished post shaft (4) shaped from 2-6 mm thick sheet metal and 3-12 m long depending on what for it is intended, with a longitudinal slit (29) 5-10 mm wide depending on the shaft's diameter, is put, by means of a conveyor, onto rotating rollers (5) of the slit welding device. Next, by means of knobs (54) provided on bolts (53) of both mechanisms (7), ends of the support beam (6) together with the pole shaft (4) lying on its traction rollers (5) are vertically translated until precise horizontal position of the shaft's slit (29) is achieved; then, the front face of the shaft with the larger diameter is positioned in the stop assembly (32) by locating conical tip of its mandrel (33) in conical seat (58) provided in the front wall (59) of pole shaft (4). Further, the semi-finished pole shaft (4) levelled and stabilised in this position, is bilaterally clamped in horizontal plane and in its symmetry axis by means of many pairs of lugs (47) and (48) of clamping assemblies (3) distributed symmetrically between support rollers (5), resulting in pressing both edges (30 and 31) creating slit (29) against each other; then said edges, after elimination of said slit, are forced down from above by hold-down roller (25) of the mobile clamping assembly (10) situated perpendicularly to horizontal plane of clamping lugs (47 and 48). After such levelling, positioning, and fastening of the semi-finished post shaft (4), the pneumatic actuator (26) provides drive to the mobile clamping assembly (10), while the fibre laser head (27) mounted on the extension arm (57) of welding robot (28) located on rails (56) situated next to the device's supporting structure (1) follows said assembly in pace thus welding both edges (30 and 31) of the pole shaft (4) together.

## Claims

1. A method of welding a semi-finished metal post shaft in the form of truncated cone or polygonal pyramid with a longitudinal slit, consisting in introducing it to a welding device, positioning the slit in such a way that the solid is situated horizontally, lateral clamping of both edges creating the slit, and welding it by means of laser method, with simultaneous continuous process of positioning the slit by means of clamping elements of the device **characterised in that** after the semi-finished product being placed on traction rollers (5) of the welding device's adjustable support beam (6), the slit (29) of the pole shaft (4) is levelled with the aid of said beam and its position blocked by means of the side stop assembly (32), and then the semi-finished product is bilaterally and axially clamped in horizontal plane by means of clamping assemblies (3) distributed symmetrically along the whole product length until contact is achieved between edges of the slit (29), while at the same time the contacting edges are pressed by means of hold-down roller (25) moving over the slit in pace with the fibre laser head (27) of the welding device (28) following said roller and welding the slit edges together along the whole length of semi-finished post shaft (4).

2. A method of welding according to Claim 1 **characterised in that** in the course of laser welding of slit (29) of the semi-finished post shaft (4) with the use of fibre laser, the semi-finished product is kept in unchanging position, while the fibre laser head (27) together with the hold-down roller (25) move along the welded slit (29) with synchronised linear velocity.

3. A method according to Claim 1 **characterised in that** positioning of the contacting edges constituting slit (29) of semi-finished post shaft (4) is achieved by means of forces acting in two mutually perpendicular planes.

4. A method according to Claim 3 **characterised in that** edges of the slit (29) of semi-finished post shaft (4) are pressed against each other by means of many pairs of clamping elements (49) and (50), preferably semicircular, situated opposite each other in horizontal axis of the semi-finished product, and by means of a sliding clamping element (25) preferably of roller type, remaining in contact with the welded slit (29).

5. A device for welding a semi-finished metal post shaft in the form of truncated cone or polygonal pyramid with a longitudinal slit, having a body equipped with clamping elements provided rollers and a welding laser head **characterised in that** the body is a cuboidal supporting structure (1) constructed from steel sections, upper part (8) of which is equipped with horizontally situated longitudinal beam (9) joined movably and slidably with the mobile clamping assembly (10), while both longitudinally and horizontally situated beams (15 and 16) topping upper ends of lower vertical beams (11-14) of the supporting structure (1) are connected separably with rack-and-pinion clamping assemblies (3), clamping components (49 and 50) of which are situated opposite each other, in the horizontal axis of the welded semi-finished pole shaft (4), and perpendicularly to both vertical axis of the semi-finished product and hold-down roller (25); further, opposite the upper longitudinal beam (9) under the rack-and-pinion clamping assemblies (3) and in line with their axis of symmetry, a support beam (6) is located horizontally and longitudinally, upper surface of which is provided with rotationally mounted support rollers (5), while both ends of said beam are equipped with mechanisms (7) adjusting its horizontal position, and next to said body, on rails (56), a welding device (28) is located equipped with a robot extension arm (57) provided with a fibre laser head (27) and situated immediately after hold-down roller (25) of the mobile clamping assembly (10).

6. A welding device according to Claim No. 5 **characterised in that** the lower surface of longitudinal beam (9) has rolling guides (23), in which the mobile clamping assembly (10) is slidably mounted with extension arm (24) terminated preferably with a rotating hold-down roller (25) and equipped with driving pneumatic actuator (26).

7. A welding device according to Claim No. 5 **characterised in that** the support beam (6) is provided with rotating concave barrel-shaped support rollers (5) distributed preferably symmetrically along the whole length of the beam, and its mechanisms (7) supporting both ends of the beam constitute supporting elements (52) into which ends of bolts (53) provided with knobs (54) are screwed, with the other ends of the bolts being screwed into threaded holes (55) provided in both ends of said beam.

8. A welding device according to Claim No. 5 **characterised in that** the rack-and-pinion clamping assemblies (3) distributed preferably along beams (15 and 16) have identical construction and consist of housings (34) covers (35 and 36) of which are joined by means of screw bolts (37) with profiled traction rollers (44) mounted on them, while in axial seats of said covers there are two ball bearings (38) mounted on axles (39), with a pinion (40) between them engaging two racks (41 and 42), profiled back sides (43) of which, constituting guides of the racks, are in contact with both traction rollers (44), and opposite ends of both racks (41 and 42) are provided with angled lugs (47 and 48) situated opposite each other, while racks (41) of rack-and-pinion clamping assemblies (3) are provided with driving pneumatic actuators (51).

9. A device according to Claim No. 8 **characterised in that** ends of lugs (47 and 48) clamping the semi-finished pole shaft (4) along its horizontal axis of symmetry are preferably provided with curves (49 and 50).
